# EUROPEAN PATENT SPECIFICATION

(11) **EP 2 873 612 B1**
(45) Date of publication and mention of the grant of the patent: **23.05.2018**
(21) Application number: 14190872.3
(22) Date of filing: 29.10.2014
(51) Int. Cl.: B64C 27/10

(54) **Counter-rotating rotor system with fairing**
Gegenläufiges Rotorsystem mit Verkleidung
Système de rotor contre-rotatif avec carénage

(30) Priority: 06.11.2013 US 201314073301
(43) Date of publication of application: 20.05.2015
(73) Proprietor: Sikorsky Aircraft Corporation, Stratford, CT 06615 (US)
(72) Inventor: Harrigan, Matthew, Horseheads, New York 14845 (US)
(74) Representative: Schmitt-Nilson Schraud Waibel Wohlfrom Patentanwälte Partnerschaft mbB

(56) References cited:
- WO-A2-2008/036526
- WO-A2-2009/088491
- US-A1- 2009 084 891

## Description

The subject matter disclosed herein relates to the art of rotary wing aircraft and, more specifically, to coaxial multi-rotor systems for rotary wing aircraft.

In typical rotary winged aircraft, for example, helicopters with dual coaxial rotor systems, or upper rotor assemblies and lower rotor assemblies, the systems typically include several sets of bearings between the upper rotor shaft and lower rotor shaft to transfer loads between the shafts. The bearings and controls for the upper rotor assembly drive an increased diameter for the upper rotor shaft, and thus the lower rotor shaft, which increases drag during operation. As such, many coaxial rotor systems include an aerodynamic fairing positioned between the upper rotor assembly and the lower rotor assembly for drag reduction and to improve operational characteristics of the helicopter. The fairing is typically directional, meaning that for optimal performance it has a specific alignment with the fuselage of the helicopter. Mounting the fairing between the upper rotor assembly and the lower rotor assembly and maintaining this preferred alignment is difficult due to rotation of the shaft between the rotor assemblies. Typically, the installation includes mounting the fairing to the rotating shaft and providing a number of powered motors or actuators to counterrotate the fairing with respect to the shaft to maintain the preferred alignment with the fuselage. WO 2009/088491 A2 discloses a planetary de-rotational system for a fairing system, having planets rotatable in an outer ring gear.

The problem to be solved is to avoid the above mentioned problems and in particular to provide a fairing device that is easy to assemble. This problem is solved with the features of claim 1.

In one embodiment, a coaxial, dual rotor system for an aircraft includes a first rotor assembly located at a rotor axis and a second rotor assembly located at the rotor axis. An aerodynamic fairing is positioned between the first rotor assembly and the second rotor assembly along the rotor axis. A planetary gear arrangement is operably connected to the fairing and operably connected to an airframe of the aircraft to maintain a selected rotational orientation of the fairing about the rotor axis relative to the airframe.

Particular embodiments may include any of the following optional features, alone or in combination:
The first rotor assembly may be an upper rotor assembly; and the second rotor assembly may be a lower rotor assembly.

The planetary gear arrangement comprises: a first sun gear secured to the airframe; a second sun gear secured to the fairing; and one or more planet gear assemblies secured to the lower rotor assembly and interactive with the first sun gear and the second sun gear to maintain a selected position of the fairing relative to the airframe.

The planet gear assembly may include: a planet carrier secured to the lower rotor assembly; a first planet gear rotatably secured to the planet carrier and meshed with the first sun gear; and a second planet gear rotatably secured to the planet carrier and meshed with the second sun gear.

The second planet gear may be synchronously rotated with the first planet gear.

The second planet gear and the first planet gear may be connected via a shaft.

The one or more planet gear assemblies may be located between adjacent rotor blades of the lower rotor assembly.

The second sun gear may be supported by one or more bearing assemblies.

The one or more bearing assemblies may support the second sun gear both axially and radially.

The one or more bearing assemblies may be disposed between the lower rotor assembly and the second sun gear.

In another embodiment, a dual coaxial rotor rotorcraft includes an airframe, a drive system disposed at the airframe, and a coaxial, dual rotor system operably connected to the drive system. The rotor system includes a first rotor assembly located at a rotor axis and a second rotor assembly located at the rotor axis. An aerodynamic fairing is positioned between the first rotor assembly and the second rotor assembly along the rotor axis. A planetary gear arrangement is operably connected to the fairing and operably connected to the airframe of the rotorcraft to maintain a selected rotational orientation of the fairing about the rotor axis relative to the airframe.

Particular embodiments may include any of the following optional features, alone or in combination:
The first rotor assembly may be an upper rotor assembly; and the second rotor assembly may be a lower rotor assembly.

The planetary gear arrangement may comprise: a first sun gear secured to the airframe; a second sun gear secured to the fairing; and one or more planet gear assemblies secured to the lower rotor assembly and interactive with the first sun gear and the second sun gear to maintain a selected position of the fairing relative to the airframe.

The planet gear assembly may include: a planet carrier secured to the lower rotor assembly; a first planet gear rotatably secured to the planet carrier and meshed with the first sun gear; and a second planet gear rotatably secured to the planet carrier and meshed with the second sun gear.

The second planet gear may be synchronously rotated with the first planet gear.

The second planet gear and the first planet gear may be connected via a shaft.

The one or more planet gear assemblies may be located between adjacent rotor blades of the lower rotor assembly.

The second sun gear may be supported by one or more bearing assemblies.

The one or more bearing assemblies may support the second sun gear both axially and radially.

The one or more bearing assemblies may be disposed between the lower rotor assembly and the second sun gear.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of a rotary wing aircraft;
FIG. 2 is a cross-sectional view of an embodiment of a dual coaxial rotor system; and
FIG. 3 is a perspective view of an alignment mechanism for a fairing of a dual coaxial rotor system.

The detailed description explains embodiments of the invention, together with advantages and features, by way of example with reference to the drawings.

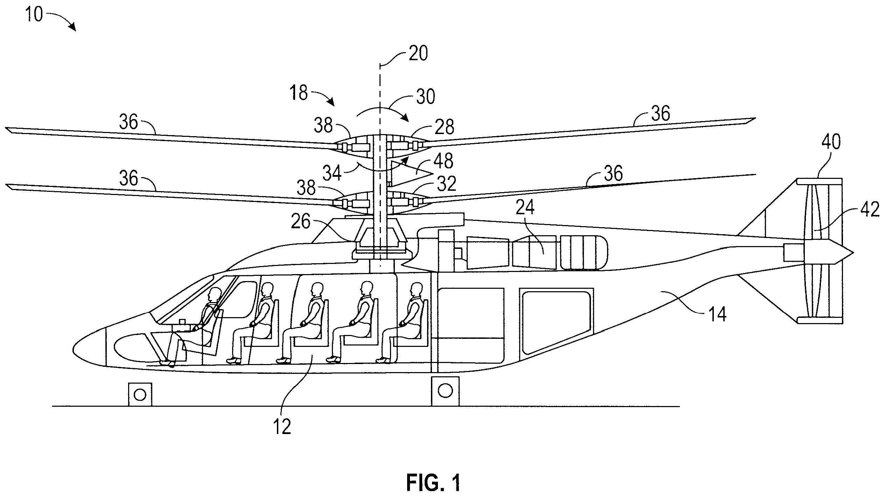

Shown in FIG. 1 is schematic view of an embodiment of a rotary wing aircraft, in this embodiment a helicopter 10. The helicopter 10 includes an airframe 12 with an extending tail 14. A dual, counter rotating coaxial main rotor assembly 18 is located at the airframe 12 and rotates about a main rotor axis 20. The main rotor assembly 18 is driven by a power source, for example, an engine 24 via a gearbox 26. The main rotor assembly 18 includes an upper rotor assembly 28 driven in a first direction 30 about the main rotor axis 20, and a lower rotor assembly 32 driven in a second direction 34 about the main rotor axis 20, opposite to the first direction 30. While, in FIG. 1, the first direction 30 is illustrated as counter-clockwise and the second direction 34 is illustrated as clockwise, it is to be appreciated that in some embodiments the directions of rotation of the upper rotor assembly 28 and lower rotor assembly 32 may be reversed. Each of the upper rotor assembly 28 and the lower rotor assembly 32 include a plurality of rotor blades 36 secured to a rotor hub 38. In some embodiments, the helicopter 10 further includes a translational thrust system 40 located at the extending tail 14 to provide translational thrust for the helicopter 10. The translational thrust system 40 includes a propeller rotor 42 connected to and driven by the engine 24 via the gearbox 26. While shown in the context of a pusher-prop configuration, it is understood that the propeller rotor 42 could also be more conventional puller prop or could be variably facing so as to provide torque in addition to or instead of translational thrust.

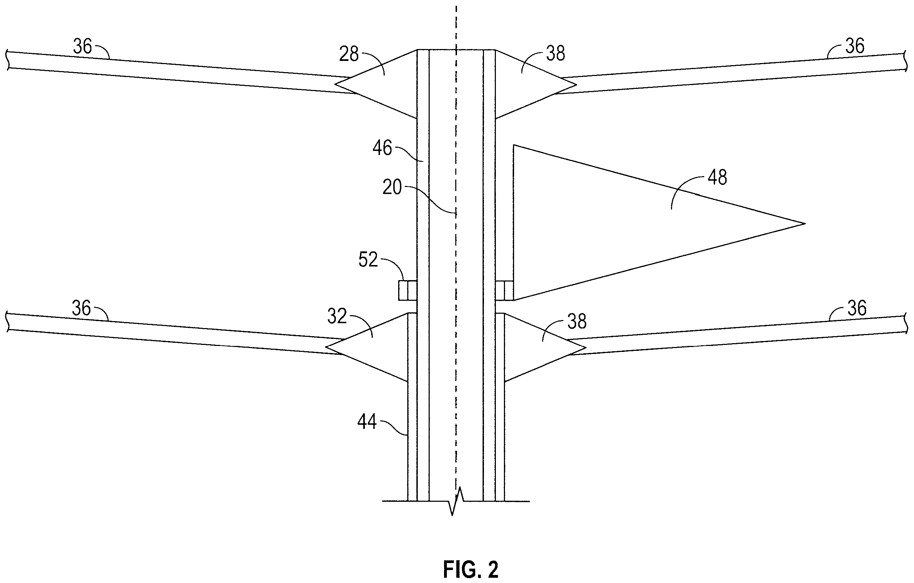

Referring to FIG. 2, the lower rotor assembly 32 is driven by a lower rotor shaft 44, while the upper rotor assembly 28 is driven by an upper rotor shaft 46 that extends through the lower rotor shaft 44. An aerodynamic fairing 48 is positioned between the upper rotor assembly 28 and the lower rotor assembly 32 and aligned at a selected angular position relative to the airframe 12.

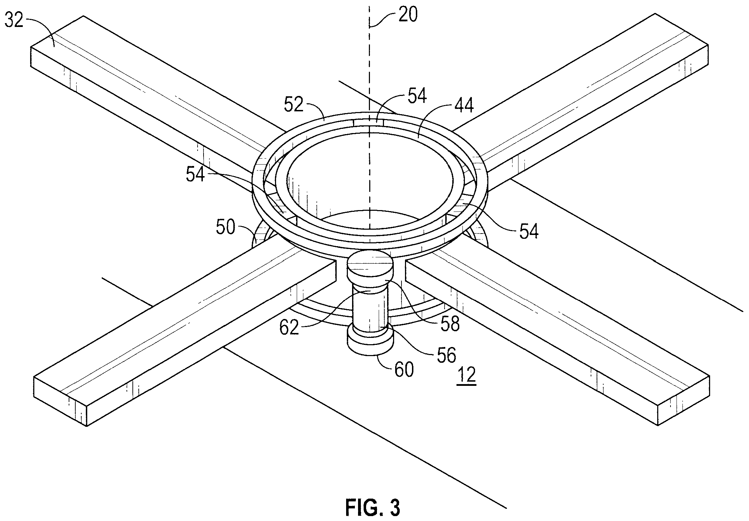

The attachment of the fairing 48 and the positioning thereof is described in more detail with reference to FIG. 3. The fairing 48 is secured in place and aligned via a unique planetary gear arrangement coaxial with the main rotor axis 20. The arrangement includes a lower sun gear 50 located below the lower rotor assembly 32 and fixed to the airframe 12 such that the lower sun gear 50 does not rotate relative to the airframe 12. An upper sun gear 52 is located between the lower rotor assembly 32 and the upper rotor assembly 28 and is supported axially and radially by bearings 54 between the lower rotor shaft 44 and the upper sun gear 52. Alternatively, the upper sun gear 52 may be supported by bearings 54 at the upper rotor shaft 46.

A planet carrier 56 is attached to the lower rotor shaft 44 and extends radially outwardly from the lower rotor hub 38 between adjacent rotor blades 36. Alternatively, in other embodiments, the planet carrier 56 extends through rotor blades 36 of the lower rotor assembly 32 or is formed unitary with the rotor blades 36. An upper planet gear 58 and lower planet gear 60 are secured to a planet shaft 62 extending through the planet carrier 56 and rotate synchronously. The upper planet gear 58 meshes with the upper sun gear 52, while the lower planet gear 60 meshes with the lower sun gear 50. In some embodiments, a single planet carrier 56 and accompanying upper planet gear 58 and lower planet gear 60 are utilized, while in other embodiments, multiple such assemblies, such as 2, 3 or 5 planet carriers 56 and accompanying upper planet gear 58 and lower planet gear 60 are utilized to balance the assembly. Through this arrangement, as the lower rotor hub 38 rotates, the fairing 48 secured to the upper sun gear 52 maintains rotational alignment with the lower sun gear 50 and the airframe 12. The planetary gear arrangement disclosed herein uses a simple, nonpowered structure that passively maintains the selected alignment of the fairing 48 and the airframe 12.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as claimed. For instance, aspects can be used with propeller assemblies, turbines, and/or fans. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A coaxial, dual rotor system (18) for an aircraft (10), comprising:
a first rotor assembly (28) disposed at a rotor axis (20); a second rotor assembly (32) disposed at the rotor axis (20);
an aerodynamic fairing (48) disposed between the first rotor assembly (28) and the second rotor (32) assembly along the rotor axis (20); and
a planetary gear arrangement operably connected to the fairing (48) and operably connectable to an airframe (12) of the aircraft (10) to maintain a selected rotational orientation of the fairing (48) about the rotor axis (20) relative to the airframe (12),
**characterized in that**
the planetary gear arrangement comprises:
a first sun gear (50) securable to the airframe (12); a second sun gear (52) secured to the fairing (48); and
one or more planet gear assemblies (56, 58, 60) secured to the second rotor assembly (32) and interactive with the first sun gear (50) and the second sun gear (52) to maintain a selected position of the fairing (48) relative to the airframe (12).

2. The rotor system (18) of Claim 1, wherein the first rotor assembly (28) is an upper rotor assembly; and the second rotor assembly (32) is a lower rotor assembly.

3. The rotor system (28) of Claim 1, wherein the planet gear assembly includes:
a planet carrier (56) secured to the second rotor assembly (32);
a first planet gear (58) rotatably secured to the planet carrier (56) and meshed with the first sun gear (50); and
a second planet gear (60) rotatably secured to the planet carrier (56) and meshed with the second sun gear (52).

4. The rotor system (18) of Claim 3, wherein the second planet gear (60) is synchronously rotated with the first planet gear (58).

5. The rotor system (18) of Claim 3 or 4, wherein the second planet gear (60) and the first planet gear (58) are connected via a shaft.

6. The rotor system (18) of any of Claims 1 to 5, wherein the one or more planet gear assemblies (56, 58, 60) are located between adjacent rotor blades (36) of the second rotor assembly (32).

7. The rotor system (18) of any of Claims 1 to 6, wherein the second sun gear (52) is supported by one or more bearing assemblies.

8. The rotor system (18) of Claim 7, wherein the one or more bearing assemblies support the second sun gear (52) both axially and radially.

9. The rotor system (18) of Claim 7 or 8, wherein the one or more bearing assemblies are disposed between the second rotor assembly (32) and the second sun gear (52).

10. A dual coaxial rotor rotorcraft (10), comprising:
an airframe (12);
a drive system (24, 26) disposed at the airframe (12); and
a coaxial, dual rotor system (18) according to any of the previous claims, said a coaxial, dual rotor system (18) operably connected to the drive system (24, 26).

## Patentansprüche

1. Koaxiales, duales Rotorsystem (18) für ein Fluggerät (10), umfassend:
eine erste Rotoranordnung (28), die an einer Rotorachse (20) angeordnet ist; eine zweite Rotoranordnung (32), die an der Rotorachse (20) angeordnet ist;
eine aerodynamische Verkleidung (48), die zwischen der ersten Rotoranordnung (28) und der zweiten Rotoranordnung (32) entlang der Rotorachse (20) angeordnet ist; und eine Planetengetriebeeinrichtung, die mit der Verkleidung (48) betriebsmäßig verbunden ist und mit einem Flugwerk (12) des Fluggeräts (10) betriebsmäßig verbindbar ist, um eine ausgewählte drehbare Orientierung der Verkleidung (48) um die Rotorachse (20) relativ zu dem Flugwerk (12) zu erhalten,
**dadurch gekennzeichnet, dass**
die Planetengetriebeeinrichtung Folgendes umfasst:
ein erstes Sonnenrad (50), das an dem Flugwerk (12) befestigbar ist; ein zweites Sonnenrad (52), das an der Verkleidung (48) befestigt ist; und
eine oder mehrere Planetengetriebeeinrichtungen (56, 58, 60), die an der zweiten Rotoranordnung (32) befestigt sind und mit dem ersten Sonnenrad (50) und dem zweiten Sonnenrad (52) wechselwirken, um eine ausgewählte Position der Verkleidung (48) relativ zu dem Flugwerk (12) zu erhalten.

2. Rotorsystem (18) nach Anspruch 1, wobei die erste Rotoranordnung (28) eine obere Rotoranordnung ist; und die zweite Rotoranordnung (32) eine untere Rotoranordnung ist.

3. Rotorsystem (28) nach Anspruch 1, wobei die Planetengetriebeeinrichtung Folgendes beinhaltet:
einen Planetenträger (56), der an der zweiten Rotoranordnung (32) befestigt ist;
ein erstes Planetengetriebe (58), das drehbar an dem Planetenträger (56) befestigt ist und mit dem ersten Sonnenrad (50) vernetzt ist; und
ein zweites Planetengetriebe (60), das drehbar an dem Planetenträger (56) befestigt ist und mit dem zweiten Sonnenrad (52) vernetzt ist.

4. Rotorsystem (18) nach Anspruch 3, wobei das zweite Planetengetriebe (60) mit dem ersten Planetengetriebe (58) synchron gedreht wird.

5. Rotorsystem (18) nach Anspruch 3 oder 4, wobei das zweite Planetengetriebe (60) und das erste Planetengetriebe (58) über eine Welle verbunden sind.

6. Rotorsystem (18) nach einem der Ansprüche 1 bis 5, wobei sich die eine oder mehreren Planetengetriebeeinrichtungen (56, 58, 60) zwischen benachbarten Rotorblättern (36) der zweiten Rotoranordnung (32) befinden.

7. Rotorsystem (18) nach einem der Ansprüche 1 bis 6, wobei das zweite Sonnenrad (52) von einem oder mehreren Lageranordnungen gestützt wird.

8. Rotorsystem (18) nach Anspruch 7, wobei die eine oder mehreren Lageranordnungen das zweite Sonnenrad (52) sowohl axial als auch radial stützen.

9. Rotorsystem (18) nach Anspruch 7 oder 8, wobei die eine oder mehreren Lageranordnungen zwischen der zweiten Rotoranordnung (32) und dem zweiten Sonnenrad (52) angeordnet sind.

10. Dualer koaxialer Drehflügler (10), umfassend:
ein Flugwerk (12);
ein Antriebssystem (24, 26), das an dem Flugwerk (12) angeordnet ist; und
ein koaxiales, duales Rotorsystem (18) nach einem der vorstehenden Ansprüche, wobei das koaxiale, duale Rotorsystem (18) betriebsmäßig mit dem Antriebssystem (24, 26) verbunden ist.

## Revendications

1. Système à double rotor coaxial (18) pour aéronef (10), comprenant :
un premier ensemble rotor (28) situé au niveau d'un axe de rotor (20) ; un second ensemble rotor (32) situé au niveau de l'axe de rotor (20) ;
un carénage aérodynamique (48) situé entre le premier ensemble rotor (28) et le second ensemble rotor (32) le long de l'axe de rotor (20) ; et un agencement d'engrenages planétaires relié fonctionnellement au carénage (48) et pouvant être relié fonctionnellement à une cellule (12) de l'aéronef (10) pour maintenir une orientation rotationnelle choisie du carénage (48) autour de l'axe de rotor (20) par rapport à la cellule (12),
**caractérisé en ce que** :
l'agencement d'engrenages planétaires comprend :
un premier pignon solaire (50) pouvant être fixé à la cellule (12) ; un second pignon solaire (52) fixé au carénage (48) ; et
un ou plusieurs ensembles d'engrenages planétaires (56, 58, 60) fixés au second ensemble rotor (32) et interagissant avec le premier pignon solaire (50) et le second pignon solaire (52) pour maintenir une position sélectionnée du carénage (48) par rapport à la cellule (12).

2. Système à rotors (18) selon la revendication 1, dans lequel le premier ensemble rotor (28) est un ensemble rotor supérieur ; et le second ensemble rotor (32) est un ensemble rotor inférieur.

3. Système à rotors (28) selon la revendication 1, dans lequel l'ensemble d'engrenages planétaires comprend :
un support (56) de planétaires fixé au second ensemble rotor (32) ;
un premier engrenage planétaire (58) fixé en rotation au support (56) de planétaires et s'engrenant avec le premier pignon solaire (50) ; et
un second engrenage planétaire (60) fixé en rotation au support (56) de planétaires et s'engrenant avec le second pignon solaire (52).

4. Système à rotors (18) selon la revendication 3, dans lequel le second engrenage planétaire (60) est mis en rotation de manière synchrone avec le premier engrenage planétaire (58).

5. Système à rotors (18) selon la revendication 3 ou 4, dans lequel le second engrenage planétaire (60) et le premier engrenage planétaire (58) sont reliés par l'intermédiaire d'un arbre.

6. Système à rotors (18) selon l'une quelconque des revendications 1 à 5, dans lequel le ou les ensembles d'engrenages planétaires (56, 58, 60) sont situés entre des pales de rotor adjacentes (36) du second ensemble rotor (32).

7. Système à rotors (18) selon l'une quelconque des revendications 1 à 6, dans lequel le second pignon solaire (52) est supporté par un ou plusieurs ensembles paliers.

8. Système à rotors (18) selon la revendication 7, dans lequel le ou les ensembles paliers supportent le second pignon solaire (52) à la fois axialement et radialement.

9. Système à rotors (18) selon la revendication 7 ou 8, dans lequel le ou les ensembles paliers sont situés entre le second ensemble rotor (32) et le second pignon solaire (52).

10. Giravion à double rotor coaxial (10), comprenant :
une cellule (12) ;
un système d'entraînement (24, 26) situé au niveau de la cellule (12) ; et
un système à double rotor coaxial (18) selon l'une quelconque des revendications précédentes, ledit système à double rotor coaxial (18) étant relié fonctionnellement au système de d'entraînement (24, 26).
